# EUROPEAN PATENT APPLICATION

(11) **EP 2 547 158 A1**
(43) Date of publication of application: **16.01.2013**
(21) Application number: 10847509.6
(22) Date of filing: 27.12.2010
(51) Int. Cl.: H04W 72/04, G08G 1/09, H04M 1/00, H04W 4/04

(54) **COMMUNICATION SYSTEM, COMMUNICATION INSTRUMENT, AND COMMUNICATION METHOD**

(30) Priority: 12.03.2010 JP 2010055781
(71) Applicant: NEC Corporation, Tokyo 108-8001 (JP)
(72) Inventor: YAMAMOTO, Takeshi, Tokyo 108-8001 (JP)
(74) Representative: Betten & Resch
(86) International application number: PCT/JP2010/073520
(87) International publication number: WO 2011/111282

(57) **Abstract**

A communication system includes a plurality of communication apparatuses that each uses CCH and a plurality of SCH to carry out communication. The plurality of communication apparatuses includes a master communication apparatus, a first slave communication apparatus, and a second slave communication apparatus. The master communication apparatus transmits SCH information that indicates the SCH that the master communication apparatus itself is using to the first slave communication apparatus; the first slave communication apparatus, when carrying out switching to the SCH that is indicated by the SCH information for communication with the master communication apparatus during communication with the second slave communication apparatus, transmits to the second slave communication apparatus channel switching information indicating that it will carry out switching to the SCH indicated by the SCH information; and the second slave communication apparatus carries out switching to the SCH indicated by the SCH information based on the channel switching information.

## Description

### Technical Field

The present invention relates to a communication system, a communication apparatus, and a communication method.

### Background Art

Communication systems exist that include roadside communication apparatuses that are installed, for example, along roads and onboard communication apparatuses that are mounted in vehicles for carrying out both road-vehicle communication between a roadside communication apparatus and an onboard communication apparatus and inter-vehicle communication between onboard communication apparatuses (see Patent Document 1).

In this type of communication system, there are systems that use and switch between two types of radio channels: a control channel (CCH) that is used for sharing high-priority information such as mutual IDs and positional information and a service channel (SCH) for transmitting and receiving a broad range of other information.

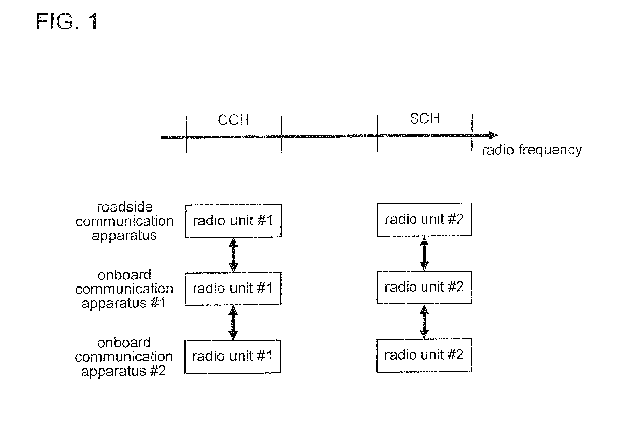

An example of the use of radio channels for a case in which a roadside communication apparatus and two onboard communication apparatuses #1 and #2 switch and use a CCH and SCH is here described using FIG. 1. In FIG. 1, a roadside communication apparatus and two onboard communication apparatuses #1 and #2 each includes two radio units #1 and #2.

In the example of FIG. 1, roadside communication apparatus and onboard communication apparatus #1 both use CCH by means of radio unit #1 and SCH by means of radio unit #2 to carry out road-vehicle communication.

Both onboard communication apparatus #1 and onboard communication apparatus #2 use both CCH by means of radio unit #1 and SCH by means of read unit to perform inter-vehicle communication.

Recently, however, the offering of many services for increasing road traffic safety or for the convenience of drivers and passengers through the use of road-to-vehicle communication and inter-vehicle communication has come under investigation.

Under these circumstances, the effective switching and use of a plurality of SCH that correspond to a plurality of services offered from roadside communication apparatuses is desirable while limiting increase in the amount of communication by CCH and avoiding deterioration of communication quality due to congestion (crowding of communication paths).

However, the example in FIG. 1 cannot accommodate the switching of a plurality of SCH because it presupposes the use of only one SCH.

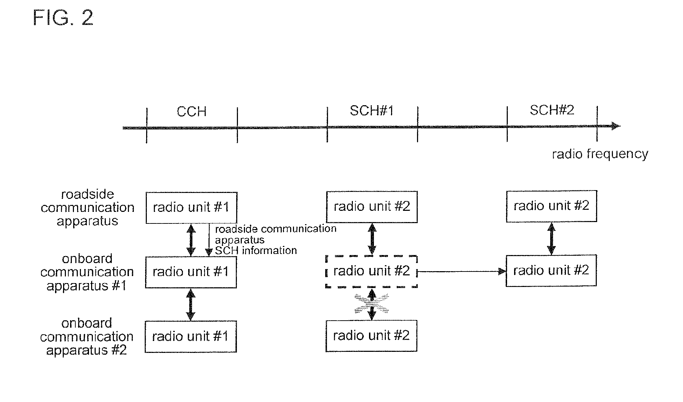

An example of the use of radio channels is here described using FIG. 2 for a case in which a roadside communication apparatus and two onboard communication apparatuses #1 and #2 switch and use a CCH and a plurality of SCH. In FIG. 2, as in FIG. 1, the roadside communication apparatus and two onboard communication apparatuses #1 and #2 each have two radio units #1 and #2.

In the example of FIG. 2, roadside communication apparatus and onboard communication apparatus #1 perform road-to-vehicle communication by both using CCH by means of radio unit #1 and selecting and using one SCH from among two SCH: SCH #1 and SCH #2, by means of radio unit #2.

The roadside communication apparatus transmits, to onboard communication apparatus #1 on the CCH, roadside communication apparatus SCH information that indicates the SCH (SCH #1 or SCH #2) that is being used in the roadside communication apparatus, and onboard communication apparatus #1 carries out road-to-vehicle communication by switching the channel used in radio unit #2 to the SCH (SCH #1 or SCH #2) that is indicated by the roadside communication apparatus SCH information.

In addition, onboard communication apparatus #1 and onboard communication apparatus #2 both carry out inter-vehicle communication by both using CCH by means of radio unit #1 and using SCH #1 by means of radio unit #2.

However, in the example of FIG. 2, when onboard communication apparatus #1 prioritizes road-to-vehicle communication with road-to-vehicle communication apparatuses while using SCH #1 to carry out inter-vehicle communication with onboard communication apparatus #2 by means of radio unit #2 and switches the channel used in radio unit #2 to the SCH indicated by the roadside communication apparatus SCH information (assumed to be SCH #2) for road-to-vehicle communication, the inter-vehicle communication that uses SCH #1 between onboard communication apparatus #1 and onboard communication apparatus #2 is interrupted

### Literature of the Prior Art

### Patent Documents

Patent Document 1: Japanese Unexamined Patent Application Publication No. 2008-205817

### Summary of the Invention

### Problem to be Solved by the Invention

As described hereinabove, when a particular communication apparatus (onboard communication apparatus #1 in the example of FIG. 2) in a related communication system switches during current communication (inter-vehicle communication in the example of FIG. 2) to a SCH for other communication (road-to-vehicle communication in the example of FIG. 2), a problem arises in which the current communication is cut off.

It is therefore an object of the present invention to provide a communication system, a communication apparatus, and a communication method that allow switching to a SCH for other communication without cutting off current communication in a communication apparatus, thereby solving the above-described problem.

### Means for Solving the Problem

The communication system of the present invention includes a plurality of communication apparatuses that each uses a CCH and a plurality of SCH to carry out communication, the plurality of communication apparatuses each including:
a master communication apparatus;
a first slave communication apparatus; and
a second slave communication apparatus;
wherein the master communication apparatus transmits SCH information that indicates the SCH that is used in the master communication apparatus itself to the first slave communication apparatus;
the first slave communication apparatus, when carrying out switching to the SCH that is indicated by the SCH information for communication with the master communication apparatus during communication with the second slave communication apparatus, transmits to the second slave communication apparatus channel switching information that indicates that the first slave communication apparatus itself will carry out switching to the SCH that is indicated by the SCH information; and
the second slave communication apparatus carries out switching to the SCH indicated by the SCH information based on the channel switching information.

The communication apparatus of the present invention is one communication apparatus among a plurality of communication apparatuses that each uses a CCH and a plurality of SCH to carry out communication and includes:
a radio unit that, when the communication apparatus itself is a master communication apparatus, transmits to a slave communication apparatus SCH information that indicates the SCH that is used in the communication apparatus itself, or alternatively, when the communication apparatus itself is a slave communication apparatus and is to carry out switching to an SCH that is indicated by the SCH information for communication with the master communication apparatus during communication with another slave communication apparatus, transmits to the other slave communication apparatus channel switching information that indicates that it will carry out switching to the SCH that is indicated by the SCH information; and
a control unit that, when the communication apparatus itself is a slave communication apparatus, upon receiving the channel switching information, carries out switching to the SCH that is indicated by the SCH information based on the channel switching information.

The communication method of the present invention is realized by a communication apparatus that is one of a plurality of communication apparatuses that each uses a CCH and a plurality of SCH to carry out communication, the communication method including steps of:
when the communication apparatus itself is a master communication apparatus, transmitting to a slave communication apparatus SCH information that indicates the SCH that is used in the communication apparatus itself;
when the communication apparatus itself is a slave communication apparatus and is to switch to a SCH that is indicated by the SCH information for communication with the master communication apparatus during communication with another slave communication apparatus, transmitting to the other slave communication apparatus channel switching information that indicates that it will carry out switching to the SCH that is indicated by the SCH information; and
when the communication apparatus itself is a slave communication apparatus, upon receiving the channel switching information, carrying out switching to the SCH that is indicated by the SCH information based on the channel switching information.

### Effect of the Invention

According to the present invention, a master communication apparatus transmits SCH information that indicates the SCH that is used in the master communication apparatus itself to a first slave communication apparatus; the first slave communication apparatus, when carrying out switching to the SCH indicated by the SCH information for communication with the master communication apparatus during communication with a second slave communication apparatus, transmits to the second slave communication apparatus channel switching information that indicates that the first slave communication apparatus itself will carry out switching to the SCH that is indicated by the SCH information; and the second slave communication apparatus, based on the channel switching information, carries out switching to the SCH indicated by the SCH information.

As a result, the effect is obtained that when a first and second slave communication apparatuses are in communication using another SCH, communication that uses a SCH can continue, and further, when in communication that uses a CCH, can switch the CCH to a SCH and continue communication.

### Brief Description of the Drawings

FIG. 1 shows an example of the use of radio channels in a related communication system.
FIG. 2 shows an example of the use of radio channels in a related communication system.
FIG. 3 is a block diagram showing the configuration of the communication system of the first exemplary embodiment of the present invention.
FIG. 4 is a block diagram showing the detailed configuration of a roadside communication apparatus according to the first exemplary embodiment of the present invention.
FIG. 5 is a block diagram showing the detailed configuration of an onboard communication apparatus according to the first exemplary embodiment of the present invention.
FIG. 6 shows an example of the use of radio channels in the communication system of the first exemplary embodiment of the present invention.
FIG. 7 is a block diagram showing the configuration of the communication system of the second exemplary embodiment of the present invention.
FIG. 8 shows an example of the use of radio channels in the communication system of the second exemplary embodiment of the present invention.

### Best Mode for Carrying Out the Invention

Modes of implementing the present invention are next described with reference to the accompanying drawings.

### First Exemplary Embodiment

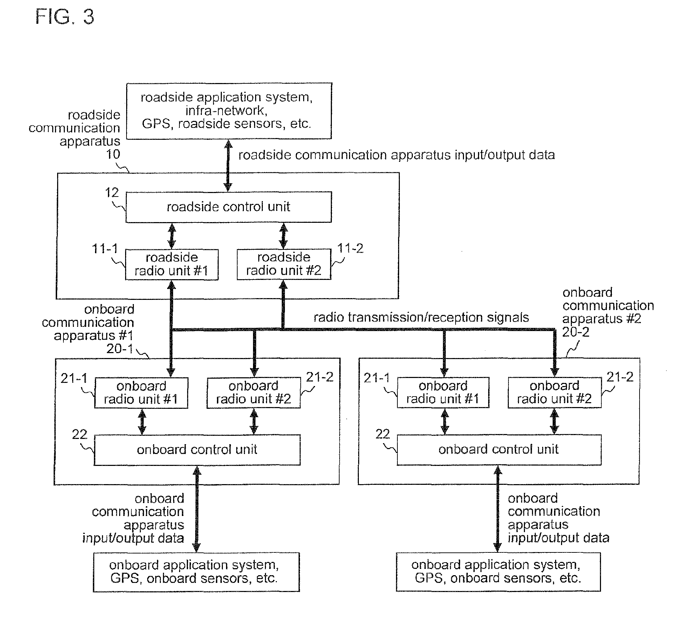

Referring to FIG. 3, the communication system of the present exemplary embodiment includes a roadside communication apparatus (10) that is installed, for example, adjacent to a road, and two onboard communication apparatuses #1 and #2 (20-1 and 20-2) that are mounted in vehicles and realizes both road-to-vehicle communication between the roadside communication apparatus (10) and the onboard communication apparatuses #1 and #2 (20-1 and 20-2) and inter-vchicle communication between onboard communication apparatuses #1 and #2 (20-1 and 20-2).

Roadside communication apparatus (10) includes two roadside radio units #1 and #2 (11-1 and 11-2) that transmit and receive radio signals, and roadside control unit (12) that controls the flow of signals of roadside communication apparatus itself.

Onboard communication apparatuses #1 and #2 (20-1 and 20-1) each include onboard radio units #1 and #2 (21-1 and 21-2) that transmit and receive radio signals, and onboard control unit (22) that controls the flow of signals of onboard communication apparatus itself.

Further details regarding the configuration of roadside communication apparatus (10) and onboard communication apparatuses #1 and #2 (20-1 and 20-2) are next described.

Roadside communication apparatus (10) receives as input roadside communication apparatus input data and supplies as output roadside communication apparatus output data to and from an outside connection unit such as a roadside application system or an infra-network.

In addition, roadside communication apparatus (10) supplies radio transmission signals to and receives radio reception signals from onboard communication apparatuses #1 and #2 (20-1 and 20-2).

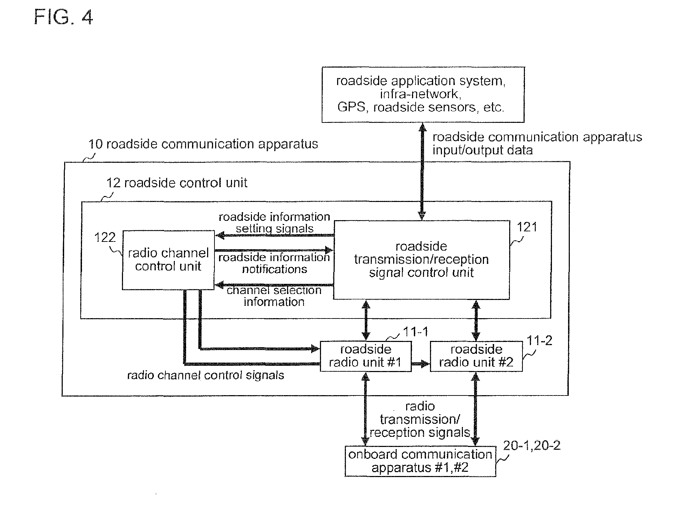

Referring to FIG. 4, roadside control unit (12) includes roadside transmission/reception signal control unit (121) and radio channel control unit (122).

Roadside transmission/reception signal control unit (121) supplies roadside information setting signals to radio channel control unit (122) based on the roadside communication apparatus input data that are supplied from the outside connection unit, and sets roadside information such as the positional information of roadside communication apparatus (10) and the radio channels that can be used.

In addition, roadside transmission/reception signal control unit (121) further, based on the roadside communication apparatus input data that are supplied from an outside connection unit, supplies to radio channel control unit (122) channel selection information for selecting the radio channel to be used when transmitting or receiving radio transmission/reception signals.

Radio channel control unit (122) supplies to roadside radio units #1 and #2 (11-1 and 11-2) radio channel control signals for selecting radio channels and switches the radio channels of roadside radio units #1 and #2 (11-1 and 11-2). Radio channel control unit (122) then supplies roadside information notification to roadside transmission/reception signal control unit (121).

Roadside transmission/reception signal control unit (121) further, based on the roadside communication apparatus input data that are supplied from an outside connection unit and the roadside information notification that is supplied from radio channel control unit (122), supplies information (such as roadside communication apparatus SCH information) that is provided to onboard communication apparatuses #1 and #2 (20-1 and 20-2) by way of radio to roadside radio units #1 and #2 (11-1 and 11-2) as transmission data.

Broadside radio units #1 and #2(11-1 and 11-2) convert the transmission data that are supplied from roadside transmission/reception signal control unit (121) to radio transmission signals and supply the converted radio transmission signals to onboard communication apparatuses #1 and #2 (20-1 and 20-2) on the radio channel that was switched by the radio channel control signal.

In addition, roadside radio units #1 and #2 (11-1 and 11-2) receive as input radio reception signals from onboard communication apparatuses #1 and #2 (20-1 and 20-2) on the radio channel that was switched by the radio channel control signal and convert the received radio reception signals to reception data and supply the data to roadside transmission/reception signal control unit (121).

Roadside transmission/reception signal control unit (121) supplies reception data that are supplied from roadside radio units #1 and #2 (11-1 and 11-2) to an outside connection unit as roadside communication apparatus output data.

On the other hand, onboard communication apparatuses #1 and #2 (20-1 and 20-2) receive as input onboard communication apparatus input data from, and supply the onboard communication apparatus output data as output to an outside connection unit such as an onboard application system.

In addition, onboard communication apparatuses # and #2 (20-1 and 20-2) supply radio transmission signals to and receive radio reception signals from roadside communication apparatus (10) and other onboard communication apparatuses (20).

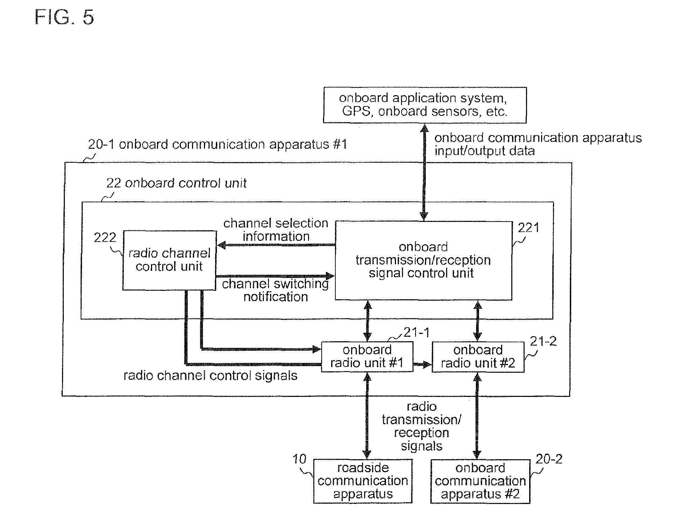

Referring to FIG. 5, onboard control unit (22) includes onboard transmission/reception signal control unit (221) and radio channel control unit (222). FIG. 5 shows the detailed configuration of onboard control unit (22) of onboard communication apparatus #1 (20-1), but onboard control unit (22) of onboard communication apparatus #2 (20-2) has the same configuration.

Onboard transmission/reception signal control unit (221), based on onboard communication apparatus input data that are supplied from an outside connection unit and reception data (roadside communication apparatus SCH information or channel switching information that is to be described) that are supplied from onboard radio units #1 and #2 (21-1 and 21-2), supplies, as output to radio channel control unit (222), channel selection information for selecting the radio channels that are used when transmitting or receiving radio transmission/reception signals.

Radio channel control unit (222) supplies a radio channel control signal for selecting a radio channel to onboard radio units #1 and #2 (21-1 and 21-2) and switches the radio channel of onboard radio units #1 and #2 (21-1 and 21-2). Radio channel control unit (222) then supplies channel switching notification to onboard transmission/reception signal control unit (221).

Based on onboard communication apparatus input data that are supplied from an outside connection unit and the channel switching notification that was supplied from radio channel control unit (222), onboard transmission/reception signal control unit (221) supplies information that is to be provided to roadside communication apparatus (10) by radio to onboard radio unit #1 (21-1) as transmission data.

In addition, based on onboard communication apparatus input data that are supplied from an outside connection unit and the channel switching notification that is supplied from radio channel control unit (222), onboard transmission/reception signal control unit (221) supplies information (such as channel switching information to be described) that is to be provided to onboard communication apparatus (#2) 20-2 by radio to onboard radio unit (#2) 21-2 as transmission data.

Onboard radio unit (#1) 21-1 converts the transmission data that are supplied from onboard transmission/reception signal control unit (221) to a radio transmission signal and supplies the converted radio transmission signal to roadside communication apparatus (10) on the radio channel that was switched by the radio channel control signal.

In addition, onboard radio unit (#1)21-1 receives as input a radio reception signal from roadside communication apparatus (10) on the radio channel that was switched by the radio channel control signal, converts the received radio reception signal to reception data and supplies the data to onboard transmission/reception signal control unit (221).

Onboard radio unit (#2) 21-2 converts the transmission data that were supplied from onboard transmission/reception signal control unit (221) to a radio transmission signal and supplies the converted radio transmission signal to onboard communication apparatus (#2) 20-2 on the radio channel that was switched by the radio channel control signal.

In addition, onboard radio unit (#2) 21-2 receives as input the radio reception signal from onboard communication apparatus (#2) 20-2 on the radio channel that was switched by the radio channel control signal, converts the received radio reception signal to reception data, and supplies the data to onboard transmission/reception signal control unit (221).

Onboard transmission/reception signal control unit (221) supplies the reception data that were supplied from onboard radio units #1 and #2 (21-1 and 21-2) to the outside connection unit as onboard communication apparatus output data.

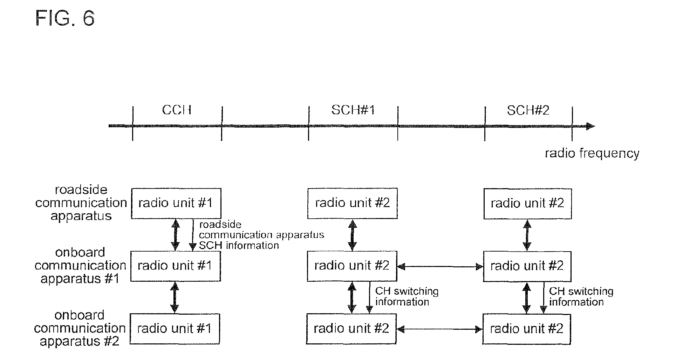

The operations of the communication system of the present exemplary embodiment are described with reference to FIG. 6. FIG. 6 is an example of the use of radio channels of the present exemplary embodiment.

In the example of FIG. 6, roadside communication apparatus (10) and onboard communication apparatus #1 (20-1) both carry out road-to-vehicle communication by using both CCH by means of radio unit #1 and by selecting and using one SCH from the two SCH of SCH. #1 and SCH. #2 by means of radio unit #2.

Roadside communication apparatus (10) transmits roadside communication apparatus SCH information that indicates the SCH (SCH #1 or SCH #2) that is used in roadside communication apparatus (10) to onboard communication apparatus #1 (20-1) on CCH, and onboard communication apparatus #1 (20-1) switches the channel used in radio unit #2 to the SCH (SCH #1 or SCH #2) that is indicated by the roadside communication apparatus SCH information and carries out road-to-vehicle communication.

If it is here assumed that onboard communication apparatus #1 (20-1) both carries out road-to-vehicle communication with roadside communication apparatus (10) and carries out inter-vehicle communication with onboard communication apparatus #2 (20-2), onboard communication apparatus #1 (20-1) must switch to the SCH indicated by the roadside communication apparatus SCH information while taking into consideration the continuation of this inter-vehicle communication.

Thus, when carrying out inter-vehicle communication with onboard communication apparatus #2 (20-2) using SCH #1 by means of radio unit #2, onboard communication apparatus #1 (20-1), when switching the channel used in radio unit #2 to the SCH (assumed to be SCH #2) that is indicated by the roadside communication apparatus SCH information for road-to-vehicle communication with roadside communication apparatus (10), transmits channel switching information that indicates that it will carry out channel switching to SCH #2 to onboard communication apparatus #2 (20-2) on SCH #1 by means of radio unit #2 in order to continue inter-vehicle communication after channel switching is performed.

Based on the channel switching information, onboard communication apparatus #2 (20-2) switches the channel used in radio unit #2 from SCH #1 to SCH #2 by means of onboard control unit (22), whereby the inter-vehicle communication that uses SCH can be continued.

In the present exemplary embodiment described hereinabove, roadside communication apparatus (10) transmits SCH information that indicates the SCH that is used in roadside communication apparatus (10) to onboard communication apparatus #1 (20-1) on CCH, onboard communication apparatus #1 (20-1) transmits channel switching information indicating that it will carry out channel switching to the SCH indicated by the SCH information to onboard communication apparatus #2 (20-2) on SCH, and onboard communication apparatus #2 (20-2) carries out channel switching based on the channel switching information.

As a result, inter-vehicle communication that uses SCH between onboard communication apparatus #1 (20-1) and onboard communication apparatus #2 (20-2) can be continued.

In addition, switching to SCH for road-to-vehicle communication can be realized without cutting off inter-vehicle communication, whereby a plurality of radio channels can be switched effectively and effective utilization of frequencies can be realized.

### Second Exemplary Embodiment

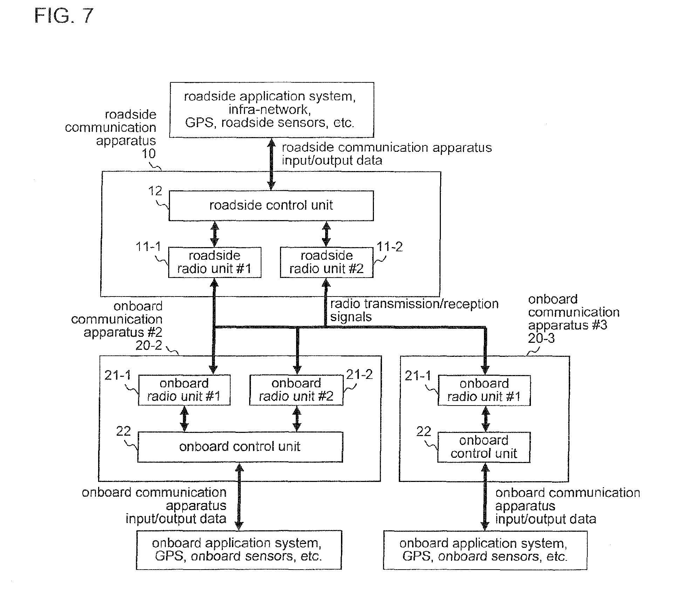

Referring to FIG. 7, the communication system of the present exemplary embodiment differs from the first exemplary embodiment shown in FIG. 3 in that onboard communication apparatus #1 (20-1) is replaced by onboard communication apparatus #3 (20-3).

Onboard communication apparatus #3 (20-3) differs from onboard communication apparatuses #1 and #2 (20-1 and 20-2) only in that it is provided with one onboard radio unit (#1) 21-1.

In other words, two types of onboard communication apparatuses (#2 and #3) 20-2 and 20-3 are used together in the present exemplary embodiment.

The configuration is otherwise similar to that of the first exemplary embodiment and redundant explanation is therefore omitted.

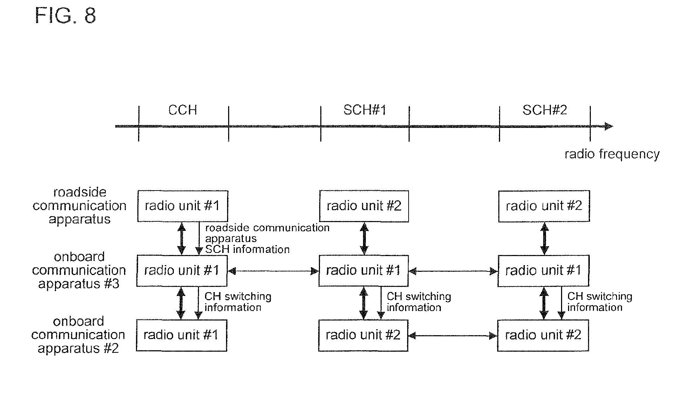

The operations of the communication system of the present exemplary embodiment are described hereinbelow with reference to FIG. 8. FIG. 8 shows an example of the use of radio channels in the present exemplary embodiment.

In the example of FIG. 8, roadside communication apparatus (10) and onboard communication apparatus #3 (20-3) both carry out road-to-vehicle communication by both using CCH by means of radio unit #1 and by selecting and using one SCH from the two SCH, SCH #1 and SCH #2, by means of radio unit #2 of roadside communication apparatus (10) and radio unit #1 of onboard communication apparatus #3 (20-3).

Roadside communication apparatus (10) transmits roadside communication apparatus SCH information that indicates the SCH (SCH #1 or SCH #2) that is used in roadside communication apparatus (10) to onboard communication apparatus #3 (20-3) on CCH, and onboard communication apparatus #3 (20-3) carries out road-to-vehicle communication by switching the channel used in radio unit #1 to the SCH (SCH #1 or SCH #2) that is indicated by the roadside communication apparatus SCH information.

If it is here assumed that onboard communication apparatus #3 (20-3) carries out both road-to-vehicle communication with roadside communication apparatus (10) and inter-vehicle communication with onboard communication apparatus #2 (20-2), onboard communication apparatus #3 (20-3) must switch to the SCH. indicated by the roadside communication apparatus SCH information while also taking into consideration the continuation of inter-vehicle communication.

Onboard communication apparatus #3 (20-3) therefore, when switching the channel used in radio unit #1 for road-to-vehicle communication with roadside communication apparatus (10) to the SCH (assumed to be SCH #2) that is indicated by the roadside communication apparatus SCH information while using CCH or SCH #1 to carry out inter-vehicle communication with onboard communication apparatus #2 (20-2) by means of radio unit #1, transmits channel switching information indicating that it is carrying out channel switching to SCH #2 to onboard communication apparatus #2 (20-2) on the radio channel (CCH or SCH #1) currently being used in radio unit #1 to continue inter-vehicle communication after switching channels is performed.

Based on the channel switching information, onboard communication apparatus #2 (20-2) switches the channel used in radio unit #2 to SCH #2 by means of onboard control unit (22), thereby enabling the continuation of the inter-vehicle communication that uses CCH by switching to SCH or enabling continuation of inter-vehicle communication that uses SCH.

In the present exemplary embodiment as described hereinabove, roadside communication apparatus (10) transmits SCH information that indicates the SCH that is used in roadside communication apparatus (10) to onboard communication apparatus #3 (20-3) on CCH, onboard communication apparatus #3 (20-3) transmits channel switching information that indicates that it will carry out channel switching to the SCH indicated by the SCH information to onboard communication apparatus #2 (20-2) on the radio channel that is being used, and onboard communication apparatus #2 (20-2) carries out channel switching based on the channel switching information.

As a result, even in the case of onboard communication apparatus #3 (20-3) that has only one radio unit #1 for limiting size or cost, when onboard communication apparatus #3 (20-3) is engaged in inter-vehicle communication that uses CCH with onboard communication apparatus #2 (20-2), the inter-vehicle communication can be continued by switching the CCH to SCH, or, when engaged in inter-vehicle communication that uses another SCH, the inter-vehicle communication that uses SCH can be continued.

The effects are otherwise the same as in the first exemplary embodiment.

Although the present invention has been described with reference to exemplary embodiments, the present invention is not limited to the above-described exemplary embodiments. The configuration and details of the present invention are open to various modifications within the scope of the present invention that will be clear to one of ordinary skill in the art.

For example, because road-to-vehicle communication is prioritized and the roadside communication apparatus transmits SCH information in the first and second exemplary embodiments, it may be said that the roadside communication apparatus is the master communication apparatus and the onboard communication apparatus is the slave communication apparatus.

However, the present invention may also be of a configuration in which the roadside communication apparatus that is the master communication apparatus in the first and second exemplary embodiments is replaced by the onboard communication apparatus and only inter-vehicle communication is carried out.

Alternatively, a configuration is also possible in which the onboard communication apparatus that receives channel switching information among the onboard communication apparatuses that are slave communication apparatuses in the first and second exemplary embodiments is replaced by the roadside communication apparatus.

Still further, a configuration is also possible in which the roadside communication apparatus that is the master communication apparatus in the first and second exemplary embodiments is replaced by an onboard communication apparatus or in which the onboard communication apparatus that receives SCH information and transmits channel switching information among the onboard communication apparatuses that are slave communication apparatuses is replaced by the roadside communication apparatus.

Still further, the present invention allows radio channels to be arranged continuously in the direction of frequency, or allows radio channels to be arranged discontinuously in the direction of frequency.

The present invention also allows the use of different radio communication methods for each radio channel.

Finally, all or a portion of the above-described exemplary embodiments can be described as shown in the following supplementary notes but are not limited to these SUPPLEMENTARY NOTES.

### SUPPLEMENTARY NOTE 1

A communication system having a plurality of communication apparatuses that each uses CCH and a plurality of SCH to carry out communication, wherein:
the plurality of communication apparatuses include:
   a master communication apparatus;
   a first slave communication apparatus; and
   a second slave communication apparatus;
   wherein:
   the master communication apparatus transmit SCH information that indicates the SCH that is used in the master communication apparatus itself to the first slave communication apparatus;
   the first slave communication apparatus, when switching to a SCH that is indicated by the SCH information for communication with the master communication apparatus during communication with the second slave communication apparatus, transmits to the second slave communication apparatus channel switching information indicating that it will carry out switching to the SCH indicated by the SCH information; and
   the second slave communication apparatus, based on the channel switching information, carries out switching to the SCH indicated by the SCH information.

### SUPPLEMENTARY NOTE 2

The communication system as described in SUPPLEMENTARY NOTE 1, wherein:
the master communication apparatus includes:
   a first radio unit that uses CCH to carry out communication; and
   a second radio unit that uses SCH to carry out communication;
   wherein the master communication apparatus transmits the SCH information to the slave communication apparatus on the CCH by means of the first radio unit.

### SUPPLEMENTARY NOTE 3

The communication system as described in SUPPLEMENTARY NOTE 2, wherein:
the first slave communication apparatus and the second slave communication apparatus each include:
   a first radio unit that uses CCH to carry out communication; and
   a second radio unit that uses SCH to carry out communication;
   wherein:
   the first slave communication apparatus transmits the channel switching information to the second slave communication apparatus on the SCH by means of the second radio unit; and
   the second slave communication apparatus, based on the channel switching information, switches the channel of the second radio unit to the SCH that is indicated by the SCH information.

### SUPPLEMENTARY NOTE 4

The communication system as described in SUPPLEMENTARY NOTE 2, wherein:
the first slave communication apparatus includes:
   a radio unit that uses CCH and SCH to carry out communication;
   the second slave communication apparatus includes:
   a first radio unit that uses CCH to carry out communication; and
   a second radio unit that uses SCH to carry out communication;
   the first slave communication apparatus transmits the channel switching information by means of the radio unit to the second slave communication apparatus on, from among the CCH and SCH, the radio channel that is being used in the radio unit; and
   the second slave communication apparatus, based on the channel switching information, switches the channel of the second radio unit to SCH that is indicated by the SCH information.

### SUPPLEMENTARY NOTE 5

The communication system as described in any one of SUPPLEMENTARY NOTES 1 to 4, wherein:
the master communication apparatus is a roadside communication apparatus, and
the first slave communication apparatus and the second slave communication apparatus are onboard communication apparatuses.

### SUPPLEMENTARY NOTE 6

The communication system as described in any one of SUPPLEMENTARY NOTES 1 to 4, wherein:
the master communication apparatus, the first slave communication apparatus, and the second slave communication apparatus are onboard communication apparatuses.

### SUPPLEMENTARY NOTE 7

The communication system as described in any one of SUPPLEMENTARY NOTES 1 to 4, wherein:
the master communication apparatus is a roadside communication apparatus,
the first slave communication apparatus is an onboard communication apparatus, and
the second slave communication apparatus is a roadside communication apparatus.

### SUPPLEMENTARY NOTE 8

The communication system as described in any one of SUPPLEMENTARY NOTES 1 to 4, wherein:
the master communication apparatus is an onboard communication apparatus,
the first slave communication apparatus is a roadside communication apparatus, and
the second slave communication apparatus is an onboard communication apparatus.

### SUPPLEMENTARY NOTE 9

A communication apparatus that is one of the plurality of communication apparatuses that each uses CCH and a plurality of SCH to carry out communication, the communication apparatus including:
a radio unit that, when the communication apparatus itself is a master communication apparatus, transmits SCH information that indicates the SCH that is used in the communication apparatus itself to a slave communication apparatus; or, when the communication apparatus itself is a slave communication apparatus, when about to carry out switching to the SCH that is indicated by the SCH information for communication with the master communication apparatus during communication with another slave communication apparatus, transmits to the other slave communication apparatus channel switching information indicating that it will carry out switching to the SCH that is indicated by the SCH information; and
a control unit that, when the communication apparatus itself is a slave communication apparatus, upon receiving the channel switching information, carries out switching to the SCH that is indicated by the SCH information based on the channel switching information.

### SUPPLEMENTARY NOTE 10

The communication apparatus as described in SUPPLEMENTARY NOTE 9, wherein:
the radio unit includes:
   a first radio unit that uses CCH to carry out communication; and
   a second radio unit that uses SCH to carry out communication;
   wherein, when the communication apparatus itself is a master communication apparatus, the radio unit transmits the SCH information to the slave communication apparatus on the CCH by means of the first radio unit.

### SUPPLEMENTARY NOTE 11

The communication apparatus as described in SUPPLEMENTARY NOTE 9, wherein:
the radio unit includes:
   a first radio unit that uses CCH to carry out communication; and
   a second radio unit that uses SCH to carry out communication;
   wherein, when the communication apparatus itself is a slave communication apparatus, the channel switching information is transmitted to the other slave communication apparatus on the SCH by means of the second radio unit; and
   when the communication apparatus itself is a slave communication apparatus, the channel of the second radio unit is switched to the SCH that is indicated by the SCH information based on the channel switching information by means of the control unit.

### SUPPLEMENTARY NOTE 12

The communication apparatus as described in SUPPLEMENTARY NOTE 9, wherein:
the radio unit uses CCH and SCH to carry out communication; and
when the communication apparatus itself is a slave communication apparatus, the radio unit transmits the channel switching information to the other slave communication apparatus on, from among the CCH and the SCH, the channel that is in use in the radio unit by means of the radio unit.

### SUPPLEMENTARY NOTE 13

The communication apparatus as described in any one of SUPPLEMENTARY NOTES 9 to 12, wherein the communication apparatus is a roadside communication apparatus or an onboard communication apparatus.

### SUPPLEMENTARY NOTE 14

A communication method realized by a communication apparatus that is one of a plurality of communication apparatuses that each uses CCH and a plurality of SCH to carry out communication; the communication method including steps of:
when the communication apparatus itself is a master communication apparatus, transmitting to a slave communication apparatus SCH information that indicates the SCH that is used in the communication apparatus itself;
when the communication apparatus itself is a slave communication apparatus and is to carry out switching to a SCH that is indicated by the SCH information for communication with the master communication apparatus during communication with another slave communication apparatus, transmitting to the other slave communication apparatus channel switching information that indicates that it will carry out switching to the SCH that is indicated by the SCH information; and
when the communication apparatus itself is a slave communication apparatus, upon receiving the channel switching information, carrying out switching to the SCH that is indicated by the SCH information based on the channel switching information.

### SUPPLEMENTARY NOTE 15

The communication method as described in SUPPLEMENTARY NOTE 14, wherein:
the communication apparatus includes:
   a first radio unit that uses CCH to carry out communication; and
   a second radio unit that uses SCH to carry out communication;
   wherein, when the communication apparatus itself is a master communication apparatus, transmitting the SCH information to the slave communication apparatus on the CCH by means of the first radio unit.

### SUPPLEMENTARY NOTE 16

The communication method as described in SUPPLEMENTARY NOTE 14, wherein:
the communication apparatus includes:
   a first radio unit that uses CCH to carry out communication; and
   a second radio unit that uses SCH to carry out communication;
   wherein, when the communication apparatus itself is a slave communication apparatus, the channel switching information is transmitted to the other slave communication apparatus on the SCH by means of the second radio unit; and
   when the communication apparatus itself is a slave communication apparatus, the channel of the second radio unit is switched to the SCH that is indicated by the SCH information based on the channel switching information.

### SUPPLEMENTARY NOTE 17

The communication method as described in SUPPLEMENTARY NOTE 14, wherein:
the communication apparatus includes:
   a radio unit that uses CCH and SCH to carry out communication;
   wherein, when the communication apparatus itself is a slave communication apparatus, the channel switching information is transmitted to the other slave communication apparatus on, of the CCH and the SCH, the channel that is in use in the radio unit by means of the radio unit.

### SUPPLEMENTARY NOTE 18

The communication method as described in any one of SUPPLEMENTARY NOTES 14 to 17, wherein the communication apparatus is a roadside communication apparatus or an onboard communication apparatus.

This application claims the benefits of priority based on Japanese Patent Application No. 2010-055781 for which application was submitted on March 12, 2010 and incorporates by citation all of the disclosures of that application.

## Claims

1. A communication system comprising a plurality of communication apparatuses that each uses a CCH and a plurality of SCH to carry out communication,
said plurality of communication apparatuses each including:
a master communication apparatus;
a first slave communication apparatus; and
a second slave communication apparatus;
wherein said master communication apparatus transmits SCH information that indicates the SCH that is used in said master communication apparatus itself to said first slave communication apparatus;
said first slave communication apparatus, when carrying out switching to the SCH that is indicated by said SCH information for communication with said master communication apparatus during communication with said second slave communication apparatus, transmits to said second slave communication apparatus channel switching information that indicates that said first slave communication apparatus will carry out switching to the SCH that is indicated by said SCH information; and
said second slave communication apparatus carries out switching to the SCH indicated by said SCH information based on said channel switching information.

2. The communication system as set forth in claim 1, wherein:
said master communication apparatus comprises:
a first radio unit that uses CCH to carry out communication; and
a second radio unit that uses SCH to carry out communication; and
said master communication apparatus transmits said SCH information to said slave communication apparatus on said CCH by means of said first radio unit.

3. The communication system as set forth in claim 2, wherein:
said first slave communication apparatus and said second slave communication apparatus each comprise:
a first radio unit that uses CCH to carry out communication; and
a second radio unit that uses SCH to carry out communication;
said first slave communication apparatus transmits said channel switching information to said second slave communication apparatus on said SCH by means of said second radio unit; and
said second slave communication apparatus switches the channel of said second radio unit to the SCH that is indicated by said SCH information based on said channel switching information.

4. The communication system as set forth in claim 2, wherein:
said first slave communication apparatus comprises
a radio unit that uses CCH and SCH to carry out communication;
said second slave communication apparatus comprises:
a first radio unit that uses CCH to carry out communication; and
a second radio unit that uses SCH to carry out communication;
said first slave communication apparatus transmits said channel switching information to said second slave communication apparatus on, of said CCH and SCH, the radio channel that is in use in said radio unit by means of said radio unit; and
said second slave communication apparatus switches the channel of said second radio unit to the SCH that is indicated by said SCH information based on said channel switching information.

5. The communication system as set forth in any one of claims 1 to 4, wherein:
said master communication apparatus is a roadside communication apparatus, and
said first slave communication apparatus and second slave communication apparatus are onboard communication apparatuses.

6. The communication system as set forth in any one of claims 1 to 4, wherein:
said master communication apparatus, said first slave communication apparatus, and said second slave communication apparatus are onboard communication apparatuses.

7. The communication system as set forth in any one of claims 1 to 4, wherein:
said master communication apparatus is a roadside communication apparatus;
said first slave communication apparatus is an onboard communication apparatus; and
said second slave communication apparatus is a roadside communication apparatus.

8. The communication system as set forth in any one of claims 1 to 4, wherein:
said master communication apparatus is an onboard communication apparatus;
said first slave communication apparatus is a roadside communication apparatus; and
said second slave communication apparatus is an onboard communication apparatus.

9. A communication apparatus that is one communication apparatus among a plurality of communication apparatuses that each uses a CCH and a plurality of SCH to carry out communication, comprising:
a radio unit that, when the communication apparatus itself is a master communication apparatus, transmits to a slave communication apparatus SCH information that indicates the SCH that is used in the communication apparatus itself, or alternatively, when the communication apparatus itself is a slave communication apparatus and is to carry out switching to a SCH that is indicated by said SCH information for communication with said master communication apparatus during communication with another slave communication apparatus, transmits to the other slave communication apparatus channel switching information that indicates that the communication apparatus itself will carry out switching to the SCH that is indicated by said SCH information; and
a control unit that, when the communication apparatus itself is a slave communication apparatus, upon receiving said channel switching information, carries out switching to the SCH that is indicated by said SCH information based on the channel switching information.

10. A communication method that is realized by a communication apparatus that is one of a plurality of communication apparatuses that each uses a CCH and a plurality of SCH to carry out communication, the communication method comprising steps of:
when the communication apparatus itself is a master communication apparatus, transmitting to a slave communication apparatus SCH information that indicates the SCH that is used in the communication apparatus itself;
when the communication apparatus itself is a slave communication apparatus and is to carry out switching to a SCH that is indicated by said SCH information for communication with said master communication apparatus during communication with another slave communication apparatus, transmitting to the other slave communication apparatus channel switching information that indicates that the communication apparatus itself will carry out switching to the SCH that is indicated by said SCH information; and
when the communication apparatus itself is a slave communication apparatus; upon receiving said channel switching information, carrying out switching to the SCH that is indicated by said SCH information based on the channel switching information.
